# EUROPEAN PATENT APPLICATION

(11) **EP 1 051 052 A1**
(43) Date of publication of application: **08.11.2000**
(21) Application number: 99109099.4
(22) Date of filing: 07.05.1999
(51) Int. Cl.: H04Q 7/32

(54) **Radiotelephone with multiple SIM card readers**

(71) Applicant: Humaid Darwish Bin Karam, Abu Dhabi (AE)
(72) Inventor: Humaid Darwish Bin Karam, Abu Dhabi (AE)
(74) Representative: Puschmann, Heinz H., Dipl.-Ing.(FH)

(57) **Abstract**

Telecommunication device, particularly a mobile phone, comprising several reading devices (13.1-13.4), connected to a control unit (7), for receiving several data carriers (14.1-14.4) containing different calling numbers to enable the user of the telecommunication device to be called under several calling numbers using a single telecommunication device, and to place outgoing calls over the least-cost route.

## Description

The invention relates to a telecommunication device and more particularly to a wireless telephone.

Wireless telephones according to the well known GSM-standard generally comprise a card reader in which a so-called SIM-card has to be inserted before the operation of the telephone is enabled. The SIM-card is issued by the provider and contains the subscriber information of the user and the telephone number under which the user of the telephone can be reached. Therefore, each wireless telephone can be reached only under a single telephone number. On the other hand, because of the decreasing hardware costs of GSM-telephones many people already have several wireless telephones with different telephone numbers for different purposes.

For example, a manager has one wireless telephone for business calls and another wireless telephone for private calls. This is advantegous since the billing of business calls is often handled by the employer whereas private calls have to be paid by the manager himself.

Further, for a traveller it might be possible to have one wireless phone with a SIM-card purchased in his home country and a further telephone with a prepaid SIM-card of a provider in the respective country. Therefore, the traveller can still be reached from his home country under his normal telephone number although he can call other people in the respective country using the prepaid SIM-card without payment of long-distance charges.

However, in order to be reachable under all different telephone numbers one has to carry all wireless phones which is quite inconvenient. Further, a caller has to remember all different telephone numbers to ensure that he can reach the owner of the conventional wireless telephones.

The problem underlying the present invention is therefore to create a telecommunication device and more particularly a wireless phone, which enables the user to be reached under several different telephone numbers without carrying several telephones.

This problem is solved by a telecommunication device according to claim 1.

The general idea of the invention is to provide a telecommunication device with several reading devices for receiving data carriers on which subscriber information is stored wherein each data carrier corresponds to a different telephone number. The term "several" in the sense of the invention means that the telecommunication device according to the invention can have two, three or more reading devices.

In the preferred embodiment of the invention the data carriers are so-called SIM-cards, whereas the reading devices are SIM-card readers which are already used in conventional wireless phones.

In a further embodiment of the invention the control unit of the wireless phone comprises a controllable switch for selecting one of the reading devices respectively one of the data carriers inserted into the reading devices for establishing outgoing calls. Preferably, the controllable switch can be actuated manually, e.g. by pressing predetermined keys on a keyboard. This means the user of the telecommunication device according to this embodiment of the invention can choose the network provider he wants to use for outgoing calls. The manual selection of the provider can be made individually for each outgoing call or alternatively it is possible to select one provider for all outgoing calls.

In another embodiment of the invention the selection of the reading device respectively the selection of the subscriber information stored on the data carrier inserted into the reading devices is effected automatically by a least-cost-router. In this embodiment the least-cost-router receives the telephone number of the outgoing call and determines the provider who offers the least expensive connection to that number. Then, the least-cost-router actuates the controllable switch to select the corresponding reading device respectively the subscriber information stored on the data carrier which is inserted into that reading device.

It should be noted that the invention is not limited to wireless telephones but can nevertheless be realized with other kinds of telecommunication equipment, e.g. mobile telephones installed in cars, cordless phones with a stationary main station or mobile fax devices.

It should further be noted that the data carrier to be inserted into the reading device can also be a permanent memory chip like a ROM or EPROM on which the subscriber information of the user is stored.

While the sepcification concludes with claims particularly pointing out and distinctly claiming the subject matter of the invention, it is believed the invention will be understood from the following description taken in connection with the accompanying drawing.

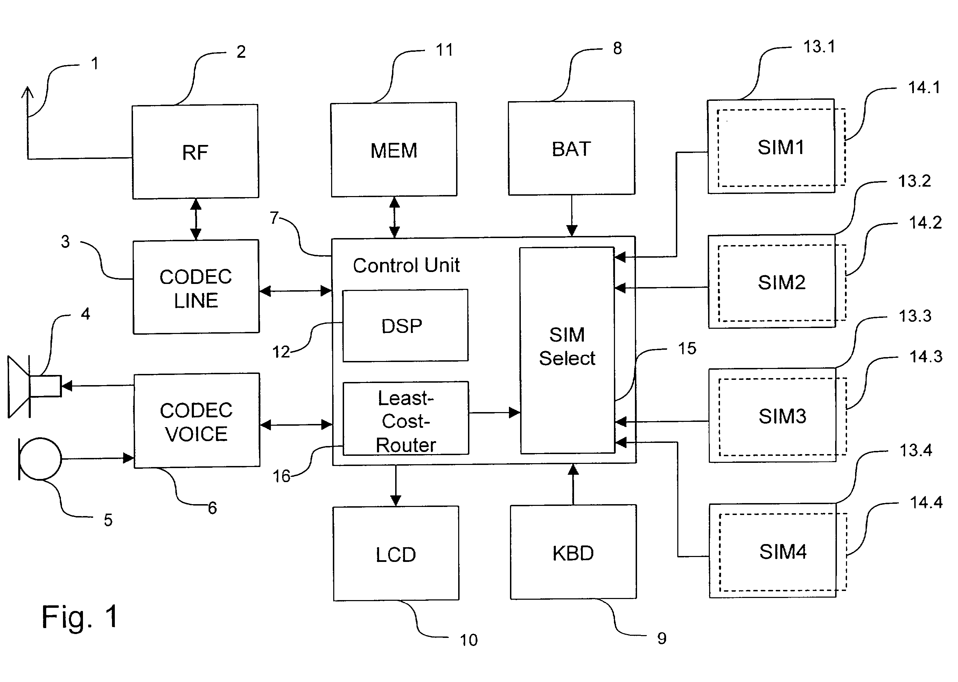

Figure 1 shows a schematic circuit diagram of the preferred embodiment of the invention.

The wireless telephone shown in Figure 1 is in accordance with the well known GSM-standard which is commonly used for mobile communication.

For receiving voice or data from the next cellular base station and for transmitting voice or data to the next cellular base station the telephone comprises an antenna 1 which is connected to a transceiver 2 (RF - radio-frequency unit).

The telephone further comprises a chipset 3 called CODEC (compression/decompression) connected to the transmitter 2 for compressing the data to be transmitted via the antenna 1 to the next cellular base station and for decompression of the data received from the cellular base station.

Further, the telephone comprises a conventional loudspeaker 4 for outputting the voice data received via the antenna 1 and also a conventional microphone 5 to input voice data by the user of the telephone. Both the loudspeaker 4 and the microphone 5 are connected to a second chipset 6 (CODEC - compression/decompression) for compression of the voice data to be input via the microphone 5 respectively to decompress the voice data to be output over the loudspeaker 4.

However, the heart of the telephone is a control unit 7 which is powered by a conventional rechargeable battery 8 and connected to a keyboard 9 (KBD) for inputting data like telephone numbers. The control unit 7 is further connected to a liquid crystal display 10 (LCD) to display user information like menu options or SMS-Messages. Moreover, the telephone comprises a conventional on-board memory 11 for storing outgoing telephone numbers, the users own telephone number, as well as incoming and outgoing SMS messages. The on-board memory 11 further allows copying between the limited memory on SIM-cards and the on-board memory 11.

The control unit 7 comprises a digital signal processor 12 (DSP) which is a critical component since it coordinates the voice and SMS features of the telephone. It processes speech, handless voice activity detection, as well as dis-continous GSM transmission and reception.

However, the components described above are all conventional, whereas the telephone according to the present invention additionally comprises four SIM-card-readers 13.1-13.4 each receiving a single SIM-card 14.1-14.4 on which subscriber information of the user is stored. In this connection it should be noted that the invention is not restricted to a wireless phone with four SIM-card readers as shown in the Figure but can nevertheless be realized with a different number of SIM-card readers, e.g. with two or three SIM-card readers. Therefore, each SIM-card 14.1-14.4 corresponds to a different telephone number under which the user of the telephone can be reached. Therefore, with a wireless telephone according to the present invention it is not necessary any longer to carry several different wireless phones for different purposes since this telephone can be used for all these purposes with different telephone numbers. A further advantage of the telephone according to the invention is that each SIM-card 14.1-14.4 can belong to a different provider of a cellular network thereby giving the user of the telephone the opportunity to choose the cheapest provider individually for each outgoing call.

In the embodiment shown in Figure 1 the telephone further comprises a controllable switch 15 for selecting one of the SIM-card-readers 13.1-13.4 respectively one of the SIM-cards 14.1-14.4 inserted into the SIM-card-reader in order to choose one provider for outgoing calls. The controllable 15 switch is actuated by a conventional least-cost-router 16 which receives the telephone number to be called and determines the provider who offers the cheapest connection to that telephone number. After this determination the least-cost-router 16 affects the controllable switch 15 accordingly to select the corresponding SIM-card 14.1-14.4.

It will be apparent to those skilled in the art that many other modifications may be made without departure from the spirit and scope of the invention.

## Claims

1. Telecommunication device, particularly a mobile phone, comprising:
an antenna (1) and a transceiver (2) connected therewith for receiving and transmitting digital data,
an output device (4, 10)) for outputting data received by the transceiver (2),
an input device (5, 9) for inputting data to be transmitted via the transceiver (2),
a control unit (7) to control the operation of the telecommunication device and
a reading device (13.1) connnected to the control unit (7) for receiving a data carrier (14.1) containing subscriber information identifying a calling number under which the user of the telecommunication device can be called,
**characterized by that**
several reading devices (13.1-13.4) are connected to the control unit (7) for receiving several data carriers (14.1-14.4) containing different calling numbers to enable the user of the telecommunication device to be called under several calling numbers using a single telecommunication device.

2. Telecommunication device according to claim 1, wherein the data carrier is a SIM-card (14.1-14.4) and the reading device is a SIM-card reader (13.1-13.4).

3. Telecommunication device according to claim 1 or 2, wherein the transceiver (2) is a GSM-transceiver.

4. Telecommunication device according to one of the preceeding claims, characterized by means (15) for selecting one of the reading devices (13.1-13.4) respectively the subscriber information stored on one of the data carriers (14.1-14.4) for establishing outgoing calls.

5. Telecommunication device according to claim 4, wherein the means (15) for selecting a reading device (13.1-13.4) are manually controllable.

6. Telecommunication device according to claim 4, wherein the means (15) for selecting a reading device (13.1-13.4) for establishing outgoing calls is connected with a least-cost-router (16).

7. Telecommunication device according to one of claims 4 to 6, further comprising a display (10) indicating the active reading device (13.1-13.4) respectively the subscriber information stored on the active data carrier (14.1-14.4).
